(19) Europäisches Patentamt
European Patent Office
Office européen des brevets

(11) **EP 2 518 016 A1**

(12) **EUROPEAN PATENT APPLICATION**
published in accordance with Art. 153(4) EPC

(43) Date of publication:
**31.10.2012 Bulletin 2012/44**

(51) Int Cl.:
***C01B 33/12*** *(2006.01)*  ***C01B 37/00*** *(2006.01)*

(21) Application number: **10839208.5**

(86) International application number:
**PCT/JP2010/072257**

(22) Date of filing: **10.12.2010**

(87) International publication number:
**WO 2011/077974 (30.06.2011 Gazette 2011/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2009 JP 2009289579**

(71) Applicant: **Kao Corporation
Chuo-ku
Tokyo 103-8210 (JP)**

(72) Inventors:
• **KOMATSU, Masaki
Wakayama-shi
Wakayama 640-8580 (JP)**
• **YANO, Toshihiro
Wakayama-shi
Wakayama 640-8580 (JP)**
• **OKADA, Tomonari
Wakayama-shi
Wakayama 640-8580 (JP)**

(74) Representative: **HOFFMANN EITLE
Patent- und Rechtsanwälte
Arabellastrasse 4
81925 München (DE)**

(54) **METHOD FOR PRODUCING COMPOSITE SILICA PARTICLES**

(57) Disclosed is a method for producing composite silica particles and hollow silica particles that can improve the utilization efficiency of a hydrophobic organic substance. It is a method for producing composite silica particles each of which is provided with an outer shell part having a mesoporous structure formed from a silica-containing component and which includes a hydrophobic organic substance in the interior of the aforementioned outer shell part, and involves adding an aqueous solvent to the hydrophobic organic substance and emulsifying, and forming the outer shell part having the mesoporous structure formed from the silica-containing component on the surface of an emulsified oil droplet of the aforementioned hydrophobic organic substance.

FIG. 1

**Description**

Technical Field

The present invention relates to a method for producing composite silica particles and a method for producing hollow silica particles.

Background Art

Since porous materials having holes in the skeletons have high specific surface areas, such porous materials are used widely as catalyst carriers and adsorbents. Among them, a porous material having holes of a sharp pore size distribution has a molecular sieve effect, and thus the material can be applied for providing selective adsorption and separation functions. In particular, mesoporous silica that has pores of meso-scale as small as those of molecules and protein has been developed. The mesoporous silica attracts attention as application to not only catalysts and adsorbents but a controlled-release material, an electronic material, an optical material and the like.

The mesoporous silica can be shaped variously such as amorphous shape, spherical, membranous, fibrous and the like. One example thereof is "hollow mesoporous silica particle", which is a silica particle having an outer shell part of mesoporous silica membrane and whose interior is hollow. Patent document 1 discloses an example of a method for producing hollow mesoporous silica particles, involving: forming hollow silica microcapsules by reacting an alkali metal silicate on an emulsion as a mixture of an organic solvent and a surfactant, and further calcining the same so as to obtain hollow mesoporous silica particles. However, in a retest for confirmation of this method, such mesoporous silica having a hollow structure is not formed, but is obtained only a mixture of hollow silica particles and solid-core silica particles neither of which has mesopores and amorphous shaped particles of mesoporous silica that do not have a hollow structure.

As another method for producing hollow mesoporous silica particles, Non-patent document 1 discloses a producing method that uses ultrasonic irradiation. However, hollow silica particles obtained by this method have a wider particle size distribution that contains also amorphous shapes not being spherical.

As a method for producing composite silica particles and hollow silica particles for the purpose of overcoming these problems, Patent document 2 discloses a method for producing mesoporous silica particles by use of oil droplets obtained by stirring a hydrophobic organic substance.

Prior Art Documents

Patent Documents

Patent document 1: JP 2006-102592 A
Patent document 2: JP 2008-150229 A

Non-patent Documents

Non-patent document 1: R,ohit K. Rana and others, Adv.Mater., Vol. 14, page 1414 (2002)

Disclosure of Invention

Problem to be Solved by the Invention

However, in a case of producing composite silica particles containing a hydrophobic organic substance in the interior of silica outer shell parts having a mesoporous structure according to the method as disclosed in Patent document 2, the amount of the hydrophobic organic substance contained in the composite silica particles with respect to the amount of the hydrophobic organic substance used for the production is low. This is unfavorable from the viewpoint of the utilization efficiency of the hydrophobic organic substance.

The present invention provides a method for producing composite silica particles and a method for producing hollow silica particles, thereby improving the utilization efficiency of the hydrophobic organic substance.

Means for Solving Problem

The present invention relates to a method for producing composite silica particles each provided with an outer shell part having a mesoporous structure formed from a silica-containing component and including a hydrophobic organic substance in the interior of the outer shell part. The method involves steps of: adding an aqueous solvent to the hydrophobic organic substance and emulsifying; and forming the outer shell part having the mesoporous structure formed from the silica-containing component on the surface of an emulsified oil droplet of the hydrophobic organic substance.
Further, in another aspect, the present invention relates to a method for producing hollow silica particles each provided with an outer shell part having a mesoporous structure and the interior being hollow. The method further involves a step of calcining the composite silica particles prepared by the method for producing composite silica particles of the present invention at temperature in a range of 350 to 950°C. Furthermore, in another aspect, the present invention relates to a method for producing hollow silica particles each provided with an outer shell part and the interior being hollow. The method further involves a step of calcining the composite silica particles prepared by the method for producing composite silica particles of the present invention at temperature higher than 950°C.

Effects of the Invention

The present invention can provide a method for producing composite silica particles or hollow silica particles, so that the utilization efficiency of hydrophobic organic substance, namely, the ratio of the amount of the hydrophobic organic substance contained in the composite silica particles with respect to the amount of the hydrophobic organic substance used for production is improved.

Brief Description of Drawings

[FIG. 1] FIG. 1 shows an example of a TEM image of composite silica particles obtained in Example 1.
[FIG. 2] FIG. 2 shows an example of a TEM image of composite silica particles obtained in Example 2.

Description of the Invention

In a typical method for producing mesoporous silica particles by use of a hydrophobic organic substance, as disclosed in Patent document 2, an outer shell mesoporous layer is formed by using a cationic surfactant and a silica source on emulsified oil droplets of a hydrophobic organic substance while forming (emulsifying) the oil droplets in an aqueous solvent. The present invention has a ground on a finding that the utilization efficiency of the hydrophobic organic substance (the ratio of the amount of hydrophobic organic substance contained in the composite silica particle with respect to the amount of the hydrophobic organic substance used in the production) can be improved by flocculating and precipitating the hydrophobic organic substance from the homogenous phase of the hydrophobic organic substance and emulsifying. Further, the present invention has a ground on a finding that the utilization efficiency of the hydrophobic organic substance is improved and further the particle size of the obtained mesoporous silica particles can be controlled easily, by distinguishing clearly an "emulsification" step and a "silica formation" step.
Namely, the present invention relates to a method for producing composite silica particles each provided with an outer shell part having a mesoporous structure formed from a silica-containing component and including a hydrophobic organic substance in the interior of the outer shell part (hereinafter, referred also to as "a method for producing composite silica particles of the present invention"), and the method for producing composite silica particles involves: adding an aqueous solvent to the hydrophobic organic substance and emulsifying; and forming the outer shell part having a mesoporous structure formed from a silica-containing component on emulsified oil droplets of the hydrophobic organic substance. According to the method for producing composite silica particles of the present invention, the utilization efficiency of the hydrophobic organic substance can be improved. Further, according to the method for producing composite silica particles of the present invention, particles of a desired particle size can be obtained.
In the present description, the "utilization efficiency of hydrophobic organic substance" is an index to indicate the ratio of the amount of a hydrophobic organic substance contained in the composite silica particles with respect to the amount of the hydrophobic organic substance used for production of the composite silica particles of the present invention. Specifically, "effective used amount of hydrophobic organic substance" as described in the below-mentioned Examples can be used. It is preferable that the utilization efficiency of hydrophobic organic substance is high from the viewpoint of environmental protection and also from the viewpoint of the cost in a case of using a hydrophobic organic substance that has functionality as it is or a functional substance (e.g., perfume, medicines and the like) that is dissolved in the hydrophobic organic substance.

In the present description, "composite silica particle" denotes a silica particle composed of at least an outer shell part formed from a silica-containing component and another substance contained in the outer shell part. In the present description, "outer shell part" denotes a part including the outermost layer in a case where one particle is classified into two or more layers from the core as the center of the particle. Further in the present description, "another substance contained in the outer shell part" includes the below-mentioned "hydrophobic organic substance".

In the present description, the "outer shell part formed from a silica-containing component" indicates that the main component for forming the skeleton of the outer shell part is silica, and that preferably 50 mol% or more of the component for the outer shell part, more preferably 70 mol% or more, further preferably 90 mol% or more, and still further preferably 95 mol% or more is silicon dioxide.

In the present description, "mesoporous structure" denotes such a structure formed through self-organized hydrothermal synthesis that occurs when a silica source and a cationic surfactant are mixed. In general, it denotes a structure having homogeneous and ordered pores (pore diameter is 1 to 10 nm).

In the present description, "hollow silica particle" denotes a silica particle having an outer shell part formed from a silica-containing component and the interior of the outer shell part is hollow. In the present description, the expression that the interior of the outer shell part is hollow indicates that the interior of the particle is filled with a gas, or that the interior of the particle is vacuum. In a case where the hollow silica particle is in a liquid, the interior of the particle is filled with the liquid.

[Hydrophobic organic substance]

It is preferable that a hydrophobic organic substance to be used in the method for producing composite silica particles of the present invention is capable of forming emulsified droplets (emulsified oil droplets) in water from the viewpoint of improving the utilization efficiency of the hydrophobic organic substance. It is further preferable that the temperature range for the hydrophobic organic substances to be in a liquid state is 0 to 100°C, and more preferably 20 to 90°C, from the viewpoint of using water as a dispersion medium and improving the utilization efficiency of the hydrophobic organic substance.

For the hydrophobic organic substance to be used in the method for producing composite silica particles of the present invention, a compound that has a low solubility with respect to water and that forms a separated phase with water is preferred from the viewpoint of improving the utilization efficiency of the hydrophobic organic substance. It is more preferable that the hydrophobic organic substance is a compound soluble in an organic solvent compatible with water and that the compound can be emulsified by a below-mentioned quaternary ammonium salt. It is further preferable that the LogP of the hydrophobic organic substance is 1 or higher, more preferably, 2 to 10. Here, LogP is a value of a chemical substance obtained by 1-octanol / water partition coefficient. Specifically, it is obtained by fragmenting the chemical structure of the compound into its components, and by accumulating a hydrophobic fragment constant of each fragment (See Meylan, W.M. and P.H. Howard. 1995. Atom/fragment contribution method for estimating octanol-water partition coefficients. J. Pharm. Sci. 84: 83-92).

Specific examples of the hydrophobic organic substance include hydrocarbon compounds, ester compounds, fatty acids having 6 to 22 carbon atoms, and oils such as silicone oil.

Examples of the hydrocarbon compounds include alkanes having 5 to 18 carbon atoms, cycloalkanes having 5 to 18 carbon atoms, liquid paraffin or liquid petroleum jelly, squalane, squalene, perhydro squalene, trimethylbenzene, xylene, toluene, benzene, and the like. Among them, alkanes having 5 to 18 carbon atoms and cycloalkanes having 5 to 18 carbon atoms are preferred.

Examples of the ester compounds include oils and fats such as glyceroesters with fatty acid having 6 to 22 carbon atoms. The examples include mink oil, turtle oil, soybean oil, sweet almond oil, beauty leaf oil, palm oil, grape seed oil, sesame oil, corn oil, parleam oil, alala oil, rapeseed oil, sunflower oil, cotton seed oil, apricot oil, castor oil, avocado oil, jojoba oil, olive oil, cereal germ oil, and the like.

Examples of the ester compounds include condensation products of fatty acids having 4 to 22 carbon atoms and either monohydric or polyhydric alcohols having 1 to 22 carbon atoms other than glycerol. The specific examples include isopropyl myristate, isopropyl palmitate, butyl stearate, hexyl laurate, isononyl isononancate, 2-ethylhexyl pahnitate, 2-hexyldecyl laurate, 2-octyldecyl palmitate, and 2-octyldecyl myristate. Examples of other ester compounds include an ester of polyvalent carboxylic acid compound and alcohol. The specific examples include diisopropyl adipate, 2-octyldodecylester lactate, 2-diethylhexyl succinate, diisostearyl malate, glyceryl triisostearate, diglyceryl triisostearate, and the like.

Examples of the fatty acids having 6 to 22 carbon atoms includes myristic acid, palmitic acid, stearic acid, behenic acid, oleic acid, linoleic acid, linolenic acid, isostearic acid, and the like.

Examples of silicone oils include polydimethylsiloxane (PDMS), polysiloxane denatured with fatty acids, fatty alcohols, polyoxyalkylene, fluorosilicone, perfluorosilicone oil, and the like.

The polydimethylsiloxane (PDMS) may be phenylated. For example, it may be phenyltrimethicone. Alternatively, the polydimethylsiloxane may be substituted arbitrarily with an aliphatic group and/or an aromatic group. From the viewpoint of improving the utilization efficiency of the hydrophobic organic substance, preferably the oils are either oils based on hydrocarbons or silicone oils. A preferable example is a linear/cyclic silicone including arbitrarily either an alkyl group or an alkoxy group shaped like a pendant or present at the end of a silicone chain and including 2 to 7 silicon atoms. Particularly preferred examples include octamethylcyclotetrasiloxane, decamethylcyclopentasiloxane, hexadecamethylcyclohexasiloxane, heptamethylhexyltrisiloxane, heptamethyloctyltrisiloxane, and the like.

Among the above-mentioned oils, from the viewpoint of improving emulsification easiness by a quaternary ammonium salt and improving the utilization efficiency of the hydrophobic organic substance, alkanes having 5 to 18 carbon atoms and cycloalkanes having 5 to 18 carbon atoms are preferred. Alkanes having 5 to 10 carbon atoms and cycloalkanes having 5 to 10 carbon atoms are preferred further.

For the components to be included in the hydrophobic organic substance contained in the composite silica particles, functional materials can be used. This provides advantages, for example, controlled release of the functional materials can be carried out. Examples of the functional materials include perfume components, base materials for agricultural chemicals, base materials for medicines, and the like.

Examples of the perfume components include natural perfumes and synthetic perfumes. Examples of the natural perfumes include spearmint oil, peppermint oil, citronella oil, eucalyptus oil, cascarilla oil, birch oil, cinnamon oil, clove oil, garlic oil, Japanese peppermint oil, marjoram oil, nutmeg oil, palmarosa oil, beefsteak plant oil, rose oil, savoury oil, rosemary oil, lavender oil, and the like. Examples of the synthetic perfumes include amyl acetate, $\alpha$-amylcinnamic aldehyde, isoamyl salicylate, anisaldehyde, benzyl acetate, benzyl alcohol, borneol, l-carvone, menthol, citral, citronellal, coumarin, eugenol, methyl salicylate, vanillin, terpineol, and the like.

In the method for producing composite silica particles and the hollow silica particles of the present invention, one kind of hydrophobic organic substance can be used alone, or two or more kinds of hydrophobic organic substances can be mixed at an arbitrary ratio in use. The hydrophobic organic substance may be used as a mixture of a hydrophobic organic substance and a compound that does not meet the above-mentioned conditions for hydrophobicity (above-described physical properties of hydrophobic organic substance). Alternatively, the compound may be dissolved in a hydrophobic organic substance. For example, in a case where the composite silica particles are used as a fragrance carrier, a hydrophobic liquid composition that have been prepared by dissolving and diluting the aromatic component in a hydrophobic organic substance can be used.

In the present description, examples of the "aqueous solvent" include distilled water, ion exchange water, ultrapure water, and the like. From the viewpoint of emulsifying the hydrophobic organic substance more homogeneously and stably, a compatible organic solvent can be added to the aqueous solvent. Examples of the organic solvents include lower alcohols such as methanol, ethanol, isopropyl alcohol and the like, and acetone. With regard to the amounts of the organic solvent to be added, the producing method of the present invention can be performed if the aqueous solvent and the hydrophobic organic substance after the addition is phase-separated. Therefore, it is preferred that the amount is 0.1 to 500 wt% with respect to the aqueous solvent, and more preferably 1 to 100 wt%.

[Emulsification step]

The producing method of the present invention involves a step of "adding an aqueous solvent to a hydrophobic organic substance and emulsifying". At the time of this emulsification, the below-mentioned quaternary ammonium salt may be added to at least either the hydrophobic organic substance or the aqueous solvent. Further, if the below-mentioned silica source is included in the hydrophobic organic substance in advance, it is possible to perform "forming outer shell parts having a mesoporous structure formed from a silica-containing component" at the same time of the emulsification.

In the method for producing composite silica particles and hollow silica particles of the present invention, "forming outer shell parts having a mesoporous structure formed from a silica-containing component" can be carried out by stirring an emulsion of a hydrophobic organic substance formed by emulsification under the presence of below-mentioned "quaternary ammonium salt" and "silica source for generating a silanol compound by hydrolysis". From the viewpoint of improving the utilization efficiency of the hydrophobic organic substance, it is preferable that the temperature of the reaction for forming the outer shell part is in a range of 10 to 100°C, and more preferably 10 to 80°C. From the viewpoint of improving the utilization efficiency of the hydrophobic organic substance, it is preferable that the reaction time is in a range of 0.01 to 24 hours and more preferably, 0.02 to 12 hours. In a case of using plural kinds of hydrophobic organic substances, for example, when mixing a substance having a higher temperature and a substance having a lower temperature in a liquid state, persons skilled in the art could determine the emulsification temperature and the reaction temperature by taking the volatility into consideration.

Therefore, in an embodiment of the method for producing composite silica particles and hollow silica particles of the present invention, from the viewpoint of improving the utilization efficiency of the hydrophobic organic substance, it is preferable that the outer shell parts are formed under the presence of at least one quaternary ammonium salt selected from the group consisting of the following general formulae (1) and (2), and also a silica source for generating a silanol

compound by hydrolysis:

$$[R^1(CH_3)_3N]^+X^- \qquad (1)$$

$$[R^1R^2(CH_3)_2N]^+X^- \qquad (2)$$

(in the general formulae, $R^1$ and $R^2$ each denotes independently a linear or branched alkyl group having 4 to 22 carbon atoms, and $X^-$ denotes a univalent anion).

[Quaternary ammonium salt]

In the method for producing composite silica particles and hollow silica particles of the present invention, at least one kind of quaternary ammonium salt selected from the group consisting of the above general formulae (1) and (2) is used as a surfactant for forming mesopores and emulsifying the hydrophobic organic substance.

$R^1$ and $R^2$ in the above general formulae (1) and (2) each denotes independently a linear or branched alkyl group having 4 to 22 carbon atoms, preferably having 6 to 18 carbon atoms, and further preferably having 8 to 16 carbon atoms. Examples of the alkyl groups having 4 to 22 carbon atoms include butyl groups, pentyl groups, hexyl groups, heptyl groups, octyl groups, nonyl groups, decyl groups, dodecyl groups, tetradecyl groups, hexadecyl groups, octadecyl groups, eicosyl groups, and the like.

From the viewpoint of forming ordered mesopores, $X^-$ in the general formulae (1) and (2) is preferably at least one selected from the group consisting of univalent anions such as halogen ion, hydroxide ion, nitroxide ion, and the like. For the $X^-$, a halogen ion is more preferable and a chlorine ion or a bromine ion is further preferable.

Examples of alkyl trimethyl ammonium salt represented by the general formula (1) include butyl trimethyl ammonium chloride, hexyl trimethyl ammonium chloride, octyl trimethyl ammonium chloride, decyl trimethyl ammonium chloride, dodecyl trimethyl ammonium chloride, tetradecyl trimethyl ammonium chloride, hexadecyl trimethyl ammonium chloride, stearyl trimethyl ammonium chloride, butyl trimethyl ammonium bromide, hexyl trimethyl ammonium bromide, octyl trimethyl ammonium bromide, decyl trimethyl ammonium bromide, dodecyl trimethyl ammonium bromide, tetradecyl trimethyl ammonium bromide, hexadecyl trimethyl ammonium bromide, stearyl trimethyl ammonium bromide, and the like.

Examples of dialkyl dimethyl ammonium salt represented by the general formula (2) include dibutyl dimethyl ammonium chloride, dihexyl dimethyl ammonium chloride, dioctyl dimethyl ammonium chloride, dihexyl dimethyl ammonium chloride, dioctyl dimethyl ammonium bromide, didodecyl dimethyl ammonium bromide, ditetradecyl dimethyl ammonium bromide, and the like.

Among these quaternary ammonium salts, from the viewpoint of forming ordered mesopores and improving the utilization efficiency of hydrophobic organic substance, an alkyl trimethyl ammonium salt represented by the general formula (1) is preferred, and alkyl trimethyl ammonium bromide/chloride is preferred further.

From the viewpoint of forming ordered mesopores and improving the utilization efficiency of the hydrophobic organic substance, it is preferable that the above-mentioned quaternary ammonium salt is added to at least either the hydrophobic organic substance or the aqueous solvent before emulsification.

[Silica source]

In the present description, "silica source for generating a silanol compound by hydrolysis" is a substance that generates a silanol compound by hydrolysis of alkoxysilane or the like, and the specific examples are compounds expressed by the following general formulae (3) to (7) or combinations thereof.

$$SiY_4 \qquad (3)$$

$$R^3SiY_3 \qquad (4)$$

$$R^3{}_2SiY_2 \qquad (5)$$

$$R^3{}_3SiY \qquad (6)$$

$$Y_3Si\text{-}R^4\text{-}SiY_3 \qquad (7)$$

(in each of the general formulae, $R^3$ independently denotes an organic group where a carbon atom is coupled directly with a silicon atom, $R^4$ denotes a hydrocarbon group having 1 to 4 carbon atoms or a phenylene group, and Y denotes a univalent hydrolyzable group to make a hydroxyl group by hydrolysis).

From the viewpoint of improving the utilization efficiency of the hydrophobic organic substance, it is preferable for the silica source that in each of the general formulae (3)-(7) $R^3$ is independently a hydrocarbon group having 1 to 22 carbon atoms where a part of the hydrogen atoms may be substituted to fluorine atoms. It is preferably an alkyl group having 1 to 22 carbon atoms, more preferably having 4 to 18 carbon atoms, and further preferably having 8 to 16 carbon atoms, a phenyl group or benzyl group from the viewpoint of improving the utilization efficiency of hydrophobic organic substance. From the viewpoint of improving the utilization efficiency of the hydrophobic organic substance, it is preferable that $R^4$ is an alkanediyl group having 1 to 4 carbon atoms (methylene group, ethylene group, trimethylene group, propane-1,2-diyl group, tetramethylene group and the like) or a phenylene group. From the viewpoint of improving the utilization efficiency of the hydrophobic organic substance, it is preferable that Y is an alkoxy group having 1 to 22 carbon atoms, more preferably having 1 to 8 carbon atoms and further preferably having 1 to 4 carbon atoms, or a halogen group except for fluorine.

More specifically, for the silica source, the following compounds are preferred from the viewpoint of improving the utilization efficiency of the hydrophobic organic substance:

- silane compound where Y in general formula (3) is an alkoxy group having 1 to 3 carbon atoms or a halogen group except for fluorine;
- trialkoxysilane or dialkoxysilane where $R^3$ in general formula (4) or (5) is a phenyl group, a benzyl group, or a hydrocarbon group whose hydrogen atoms are partly substituted to fluorine atoms and that has 1 to 20 carbon atoms, preferably 1 to 10 carbon atoms, and more preferably having 1 to 5 carbon atoms;
- a compound where Y in general formula (7) is a methoxy group, and $R^4$ is a methylene group, an ethylene group or phenylene group.

Among them, from the viewpoint of improving the utilization efficiency of hydrophobic organic substance, the silica source is preferably tetramethoxysilane, tetraethoxysilane, phenyltriethoxysilane, or 1,1,1-trifluoropropyltriethoxysilane.

The silica source may be added to an emulsion of a hydrophobic organic substance after emulsification under the presence of quaternary ammonium salt. Alternatively, the silica source may be included partly or entirely in advance in the hydrophobic organic substance. If the silica source is included in advance in the hydrophobic organic substance, the reaction for forming the outer shell parts can be conducted at the same time of the emulsification.

Therefore, in another aspect, the method for producing composite silica particles of the present invention is a method for producing composite silica particles provided with outer shell parts having a mesoporous structure formed from a silica-containing component, and containing a hydrophobic organic substance in the interior of the outer shell parts. The method involves addition of an aqueous solvent to the hydrophobic organic substance and emulsification. Here, at least either the hydrophobic organic substance or the aqueous solvent contains at least one kind of quaternary ammonium salt selected from the group consisting of the following general formulae (1) and (2);

$$[R^1(CH_3)_3N]^+X^- \qquad (1)$$

$$[R^1R^2(CH_3)_2N]^+X^- \qquad (2)$$

(in the general formulae, $R^1$ and $R^2$ each denotes independently a linear or branched alkyl groups having 4 to 22 carbon atoms, and $X^-$ denotes a univalent anion). Further, the invention relates to a method for producing composite silica particles, and the method involves addition of a solution of a silica source for generating a silanol compound by hydrolysis to the hydrophobic organic substance before addition of the aqueous solvent and/or addition of the solution to an emulsion that has been subjected to emulsification. The hydrophobic organic substance, the aqueous solvent, the quaternary ammonium salt, and the silica source are described above.

[Embodiment 1]

One embodiment of the method for producing composite silica particles of the present invention will be described below. The method for producing composite silica particles of this embodiment involves the following steps (I) to (III).

Step (I): a step of preparing a hydrophobic organic substance (solution A), a solution (solution B) containing water (aqueous solvent), and a silica source (solution C) for generating a silanol compound by hydrolysis; where at least either the solution A or solution B contains at least one kind of surfactant selected from the group of quaternary ammonium salts expressed by general formulae (1) and (2):

$$[R^1(CH_3)_3N]^+X^- \qquad (1)$$

$$[R^1R^2(CH_3)_2N]^+X^- \qquad (2)$$

(in the general formulae, $R^1$ and $R^2$ each denotes independently a linear or branched alkyl group having 4 to 22 carbon atoms, and $X^-$ denotes a univalent anion);

Step (II): a step of mixing the solution A prepared in the step (I) with the solution B and emulsifying (forming an O/W type emulsion);

Step (III): a step of adding the solution C to the aqueous solution obtained in the step (II).

The amount of the hydrophobic organic substance in the solution A is preferably 0.1 to 100 mmol/L, more preferably 1 to 100 mmol/L, and further preferably 5 to 80 mmol/L from the viewpoint of improving the utilization efficiency of the hydrophobic organic substance. The amount of the quaternary ammonium salt in the solution A and/or the solution B is preferably 0.1 to 100 mmol/L, more preferably 1 to 100 mmol/L, and further preferably 5 to 80 mmol/L from the viewpoint of improving the utilization efficiency of the hydrophobic organic substance. The amount of the silica source in the solution C is preferably 0.1 to 100 mmol/L, more preferably 1 to 100 mmol/L, and further preferably 5 to 80 mmol/L from the viewpoint of improving the utilization efficiency of the hydrophobic organic substance. Specific examples of the hydrophobic organic substance, the quaternary ammonium salt and the silica source are described above.

There is no particular limitation for the solvent to compose the solutions A to C as long as the following requirements are satisfied, namely, the emulsification of the hydrophobic organic substance and formation of silica particles are not inhibited; the solvents can dissolve the above-described components to be contained in the respective solutions; and the respective solvents are compatible with each other. Mixed solvents or the like may be used, and the solvent compositions can be adjusted in accordance with some factors such as the target emulsion droplet size and emulsification stability. In a case where any elements other than silica and organic groups are to be carried, metallic materials of alkoxy salts and halogenated salts containing these metals may be added during or after the production.

In the step (II), from the viewpoint of obtaining fine emulsified droplets, it is preferable that the solution A is stirred at the time of adding the solution B to the solution A, and that the time for the addition is shortened. Further, the temperature of the system may be adjusted for emulsification of the hydrophobic organic substance.

The step (III) is a step of adding the solution C to the emulsion prepared in the step (II). After adding the solution C to the emulsion obtained in the step (II), the solutions are stirred for a predetermined time at temperature of 10 to 100°C for example, preferably 10 to 80°C, and placed statically for a while so that outer shell parts provided with a mesoporous structure by the quaternary ammonium salt and the silica source are formed on the surfaces of the emulsified droplets of the hydrophobic organic substance, and thus, composite silica particles containing the hydrophobic organic substance in the interior can be precipitated. Though the stirring time varies depending on the composition of the aqueous solution and the temperature, typically the composite silica particles are formed in 0.01 to 24 hours at 10 to 80°C.

[Embodiment 2]

The description below refers to another embodiment of the method for producing composite silica particles of the present invention. The method for producing composite silica particles in this embodiment involves the following steps (I') and (II').

Step (I'): a step of preparing a hydrophobic organic substance (solution A') containing a silica source for generating a silanol compound by hydrolysis, and a solution (solution B) including water (aqueous solution), where at least either the solution A' or the solution B contains at least one kind of surfactant selected from quaternary ammonium salts expressed by general formulae (1) and (2):

$$[R^1(CH_3)_3N]^+X^- \qquad (1)$$

$$[R^1R^2(CH_3)_2N]^+X^- \qquad (2)$$

(in the general formulae, $R^1$ and $R^2$ each denotes independently a linear or branched alkyl group having 4 to 22 carbon atoms, and $X^-$ denotes a univalent anion).

Step (II'): a step of mixing a solution B with the solution A' prepared in the step (I'), emulsifying and forming outer shell parts.

The respective amounts of the hydrophobic organic substance and the silica source in the solution A' are preferably 0.1 to 100 mmol/L, more preferably 1 to 100 mmol/L, and further preferably 5 to 80 mmol/L from the viewpoint of improving the utilization efficiency of the hydrophobic organic substance. The amount of the quaternary ammonium salt in the solution A' and/or the solution B is preferably 0.1 to 100 mmol/L, more preferably 1 to 100 mmol/L, and further preferably 5 to 80 mmol/L from the viewpoint of improving the utilization efficiency of the hydrophobic organic substance. Specific examples of the hydrophobic organic substance, the quaternary ammonium salt and the silica source are as mentioned above. Similarly, the solvent composing the solution A' can be selected and used with reference to the description of the above-mentioned solvent for the solution A.

In the step (II'), from the viewpoint of obtaining fine emulsified droplets, it is preferable that the solution A' is stirred at the time of adding the solution B to the solution A' and that the time for the addition is shortened. Further, the temperature of the system can be adjusted for emulsification of the hydrophobic organic substance.

The step (II') is a step of emulsifying the hydrophobic organic substance and forming the outer shell parts having a mesoporous structure. After adding the solution B to the solution A', the solution is stirred for a predetermined time at temperature of 10 to 100°C for example, preferably at temperature of 10 to 80°C, and then placed statically for a while, so that outer shell parts provided with a mesoporous structure by the quaternary ammonium salt and the silica source are formed on the surfaces of the emulsified droplets of the hydrophobic organic substance, and thus, composite silica particles containing the hydrophobic organic substance in the interior can be precipitated. Though the stirring time varies depending on the composition of the aqueous solution or the temperature, composite silica particles are formed in general for 0.01 to 24 hours at 10 to 80°C.

The method for producing composite silica particles of the present invention may involve separating the obtained composite silica particles and drying after the reaction for forming the outer shell parts. Filtration, centrifugation and the like can be used for the separation. In order to suppress evaporation of the hydrophobic organic substance during the drying, it is preferable that heating is avoided but heating can be conducted as long as the temperature does not exceed the boiling point of the hydrophobic organic substance in the interiors.

The method for producing composite silica particles of the present invention may involve further allowing the composite silica particles to contact with an acidic aqueous solution after formation of the outer shell parts. Thereby, the quaternary ammonium salt present in the interior of the mesoporous structure of the composite silica particles can be reduced or removed. In an embodiment, for example, the composite silica particles that have been separated and dried as mentioned above may be allowed to contact with an acidic aqueous solution. Specifically, the composite silica particles are added to the acidic aqueous solution, and stirred at 0 to 95°C for 0.1 to 96 hours. Examples of the acid for the acidic aqueous solution include hydrochloric acid, nitric acid, sulfuric acid, citric acid, phosphoric acid and the like. Among these examples, hydrochloric acid is preferred in particular from the viewpoint of efficiently reducing the quaternary ammonium salt. For the concentration of the acidic aqueous solution, a range of 0.0001 to 5 M is preferred from the viewpoint of efficiently reducing the quaternary ammonium salt, more preferably, 0.001 to 3 M, and further preferably, 0.01 to 1 M.

According to the method for producing composite silica particles of the present invention, it is possible to produce composite silica particles where the average pore diameter of the mesopores of the mesoporous structure at the outer shell parts is preferably 1 to 10 nm, more preferably 1 to 8 nm, and further preferably 1 to 5 nm. The average pore diameter of the mesopores can be measured by conducting a nitrogen adsorption measurement and a calculation by a BJH method from the nitrogen adsorption isotherm. According to the method for producing composite silica particles of the present invention, preferably composite silica particles with a uniform mesopore diameter can be produced, and more preferably, composite silica particles where 70% or more of the mesopores are within ±30% of the average mesopore diameter can be produced. The structure of the outer shell part having the mesoporous structure can be observed by using a transmission electron microscope (TEM), and it is possible to check the pore diameter, the pore regularity, and the manner in which the pore links the outer shell part and the interior.

Furthermore, according to the method for producing composite silica particles of the present invention, the BET specific surface area after a contact with the acidic aqueous solution is preferably 100 $m^2$/g or more; more preferably, 300 $m^2$/g or more; further preferably, 400 $m^2$/g or more; and still further preferably, 500 $m^2$/g or more. From the viewpoint of strength of the composite silica particles, the BET specific surface area is preferably 1500 $m^2$/g or less; and more preferably, 1300 $m^2$/g or less.

Further, according to the method for producing composite silica particles of the present invention, it is possible to produce composite silica particles whose average particle size is preferably in a range of 0.05 to 10 $\mu$m, more preferably 0.05 to 5 $\mu$m, and further preferably 0.05 to 3 $\mu$m. Furthermore, the preferred average pore diameter of the mesopore is 1 to 5 nm when the average particle size of the composite silica particles is 0.05 to 1 $\mu$m; the preferred average pore diameter of the mesopore is 1 to 8 nm when the average particle size is 0.1 to 1 $\mu$m; and the preferred average pore diameter of the mesopore is 1 to 10 nm when the average particle size is 1 to 10 $\mu$m.

According to the method for producing composite silica particles of the present invention, preferably 80% or more, more preferably 85% or more, further preferably 90% or more and still further preferably 95% or more of the whole particles have particle sizes within ±30% of the average particle size, and thus it is possible to produce composite silica particles composed of a group of particles with a remarkably uniform particle size. And, according to the method for producing composite silica particles of the present invention, it is possible to produce composite silica particles where preferably 75% or more, or more preferably 80% or more thereof have a pore diameter within ±30% of the average pore diameter.

The average particle size, the average pore diameter, and the average thickness of the outer shell parts of the composite silica particles can be adjusted by selection of the quaternary ammonium salt and/or the hydrophobic organic substance, the stirring power at the time of mixing, the material concentration, the temperature of the solution, the rate of addition of a solution including water, the time for aging of the emulsified liquid, and the like. In a case of using the quaternary ammonium salt in the process of producing the composite silica particles, there is a possibility that the quaternary ammonium salt resides in the interior of the composite silica particles, within the mesopores, or on the silica particles. If the residual quaternary ammonium salt does not cause any substantial problem, there is no necessity of removal. However, if removal of such residual quaternary ammonium salt is desired, it is possible to remove the quaternary ammonium salt by substitution by washing with water or acidic aqueous solution.

Further, according to the method for producing composite silica particles of the present invention, it is possible to produce composite silica particles where the average thickness of the outer shell parts is preferably in a range of 10 to 700 nm, more preferably 20 to 500 nm, and further preferably 30 to 400 nm. At that time, it is possible to set the ratio of [outer shell part thickness / average particle size] to be preferably 0.01 to 0.6, more preferably 0.05 to 0.5, and further preferably 0.1 to 0.4.

In the present description, the average particle size and the distribution of the composite silica particles and also the average thickness of the outer shell parts are measured in an observation with a transmission electron microscope (TEM). Specifically, under observation with the transmission electron microscope, the diameter and the outer shell thickness of all of the 20 to 30 particles within a visual field are measured on a photograph. This operation is repeated, changing the visual field five times. From the obtained data, the average particle size and the distribution, and also the average outer shell thickness are obtained. The typical magnification of the transmission electron microscope is in a range of 10,000 to 100,000, which can be adjusted suitably depending on the size of the silica particles. However, in a case where the percentage of the composite silica particles among the particles on the screen is 30% or less, the visual field for observation will be widened, namely, the magnification is lowered to obtain data from at least 10 particles.

[Method for producing hollow silica particles]

The hydrophobic organic substance in the interior of each of the composite silica particles produced by the method for producing composite silica particles of the present invention is removed by applying heat, so that hollow silica particles having outer shell parts formed from a silica-containing component and the interior of the outer shell parts is hollow can be produced. Therefore, according to another aspect, the present invention relates to a method for producing hollow silica particles, and the method involves producing composite silica particles by the method for producing composite silica particles of the present invention, and removing the hydrophobic organic substance in the interior of the composite silica particle by applying heat.

In an aspect of a method for producing hollow silica particles of the present invention, composite silica particles that can be produced by the method for producing composite silica particles of the present invention are calcined at temperature of 350 to 950°C so as to remove the hydrophobic organic substance in the interior of the composite silica particles. As a result of involving this step, it is possible to produce hollow silica particles provided with outer shell parts having a mesoporous structure and the interiors are hollow. From the viewpoint of maintaining the mesoporous structure and simplifying the operations, the temperature for calcining is preferably in a range of 400 to 800°C, and more preferably 450 to 700°C. In an example of the calcining method, an electric furnace or the like will be used. The calcining time is 1 to 10 hours for example, which can be set suitably. According to the method for producing hollow silica particles of this aspect, mesoporous silica particles whose average pore diameter, the BET specific surface area, the average particle size, the average thickness of the outer shell parts, and the ratio of [outer shell part / average particle size] are in a substantially same ranges of those of the above-mentioned composite silica particles can be produced.

Another aspect of the method for producing hollow silica particles of the present invention involves calcining the composite silica particles that can be produced by the method for producing composite silica particles of the present invention at temperature higher than 950°C so as to remove the hydrophobic organic substance in the interior of the composite silica particles. As a result of involving this step, it is possible to produce hollow silica particles where the mesopores are hardened with heat and the outer shell parts having a reduced BET specific surface area is provided, and the interior is hollow. The BET specific surface area can be less than 30 $m^2$/g for example. The calcining temperature is preferably in a range of 960 to 1500°C, more preferably 970 to 1300°C and further preferably 980 to 1200°C for hardening the mesopores and making the BET specific surface area to be less than 30 $m^2$/g. Though the calcining time varies depending on the calcining temperature or the like, it is normally in a range of 0.5 to 100 hours, and preferably 1 to 75 hours. Before calcining at temperature higher than 950°C for removing the hydrophobic organic substance or the quaternary ammonium salt contained in the silica particles, it is possible to produce hollow silica particles having a mesoporous structure by calcining once at temperature of 350 to 950°C, and subsequently calcining at temperature higher than 950°C. In such a case, a previous calcining is carried out by use of an electric furnace or the like preferably at 400 to 800°C, and more preferably 450 to 700°C for 1 to 10 hours, and a subsequent calcining is carried out at temperature higher than 950°C. From the viewpoint of avoiding damages of the particles at the time of the calcining, a producing method involving a process of producing hollow silica particles having a mesoporous structure is more preferred. The average particle size, the average thickness of the outer shell parts, and the ratio of [outer shell part thickness / average particle size] of the hollow silica particles obtained in the production method of this aspect can be set to be substantially the same as those of the composite silica particles as mentioned above.

EXAMPLES

Hereinafter, the present invention will be described further with reference to Examples. In each of the below-mentioned Examples and Comparative Examples, measurements on the silica particles were carried out in the following manner.

(1) Measurement of average particle size and average outer shell thickness

Measurement was carried out by using a transmission electron microscope (TEM) JEM-2100 manufactured by Japan Electron Optics Laboratory Co. Ltd. at an acceleration voltage of 160 kV, thereby measuring the diameter and outer shell thickness of all of the particles in five visual fields each including 20 to 30 particles, on a photograph, so as to obtain the average particle size and the average outer shell thickness. The specimen was adhered to a microgrid type-B ((STEM150Cu grid, carbon-reinforced) manufactured by Okenshoji Co., Ltd.) from which excessive specimen was removed by blowing so as to be used for observation.

(2) Measurement of BET specific surface area and average pore diameter

An instrument for measuring specific surface area and pore distribution with a trade name of "ASAP2020" manufactured by Shimadzu Corporation was used to measure adsorption by use of liquid nitrogen, thereby derived a BET specific surface area by a multipoint method in a range where linearity of adsorption isotherm is favorable and the BET constant C becomes positive (S.Brunauer et al., J.Amer.Chem.Soc., vol.60, p.309, 1938). The BJH method as a cylinder type pore model (E.P.Barrett et al./, J.Amer.Chem.Soc., vol.73, p.373, 1951) was employed and the peak top was determined as the average pore size. The pre-treatment was carried out at 250°C for 5 hours.

(3) Method of calculation of effective used amount of hydrophobic organic substance

The effective used amount was calculated from (A) used volume of hydrophobic organic substance at the time of production, (B) SiO2-converted volume of silica source, (C) cavity volume of product, and (D) silica part volume of product.

(A) 'Used volume of hydrophobic organic substance' = 'used amount of hydrophobic organic substance at production' (g) ÷ 'hydrophobic organic substance density' (g/cm$^3$)
(B) 'SiO$_2$-converted volume of silica source' = 'used amount of silica source' (g) ÷ 'substance amount of silica source' (g/mol) × 60 (g/mol SiO$_2$ ÷ 2.2 (g/cm$^3$ SiO$_2$)
(C) 'Cavity volume of product' = 4 ÷ 3 × n × (('average particle size'- 'outer shell part thickness' × 2) ÷ 2)$^3$ 2)$^3$
(D) 'Silica part volume of product' = 4 ÷ 3 × n × ('average particle size' ÷ 2)$^3$- (C) The effective used amount of hydrophobic organic substance is an estimate value of the ratio of the hydrophobic organic substance that is actually contained in silica particles and used with respect to the amount of raw material, which is calculated through the equation below by use of the above (A)-(D), where 100(%) refers to a case where the entire amount of hydrophobic organic substance is contained in the silica particles.

$$\text{'Effective used amount of hydrophobic organic substance'} (\%) = (A \div B) \div (C \div D) \times 100$$

Example 1

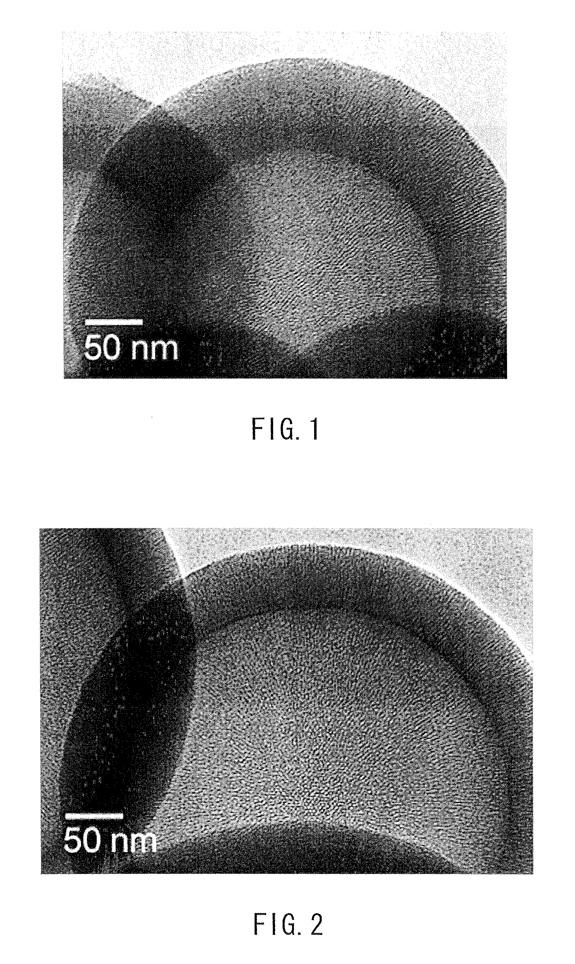

Into a 500 mL flask, 100 g of methanol (special grade; manufactured by Waco Pure Chemical Industries Ltd.), 1.7 g of dodecyl trimethyl ammonium chloride (manufactured by Tokyo Chemical Industry Co., Ltd.) and 1.5 g of rapeseed oil (manufactured by Sigma-Aldrich Japan) were introduced and stirred so as to prepare a solution A. Into a 500 mL flask, 300 g of water, 0.825 g of an aqueous solution of 25% tetramethyl ammonium hydroxide (manufactured by Waco Pure Chemical Industries Ltd.) were introduced and stirred so as to prepare a solution B. The solution B was added to the solution A while stirring the solution A at 25°C, then 1.7 g of tetramethoxysilane (solution C) (manufactured by Tokyo Chemical Industry Co., Ltd.) was added, which was stirred at 25°C for 5 hours. The obtained whitish aqueous solution was filtered with a paper filter of Grade No. 5C, washed with water, and dried at 100°C by using a dryer (DRM420DA manufactured by Advantech Co., Ltd.), thereby a white powder was obtained. The obtained dry powder was dispersed in 100 mL of 0.01 mol/L hydrochloric acid (manufactured by Waco Pure Chemical Industries Ltd.) and stirred at 25°C for 12 hours. The obtained white precipitate was filtered with a paper filter of Grade No. 5C, washed with water, and dried by using the dryer (DRM420DA manufactured by Advantech Co., Ltd.), thereby obtaining composite silica particles containing the rapeseed oil within the particles and whose outer shell parts have a mesoporous structure. The respective measurement results for the composite silica particles are illustrated in Table 1 below, and the TEM image is shown in FIG 1.

Example 2

Composite silica particles were obtained through operations similar to those of Example 1 except that 1 g of hexane (manufactured by Waco Pure Chemical Industries Ltd.) was used in place of the rapeseed oil. The respective measurement results on the composite silica particles are illustrated in Table 1 below and the TEM image is shown in FIG. 2.

Example 3

Into a 500 mL flask, 20 g of methanol (special grade; manufactured by Waco Pure Chemical Industries Ltd.), 1.7 g of dodecyl trimethyl ammonium chloride (manufactured by Tokyo Chemical Industry Co., Ltd.), 0.7 g of dodecane (manufactured by Waco Pure Chemical Industries Ltd.) and 0.68 g of tetramethoxysilane (manufactured by Tokyo Chemical Industry Co., Ltd.) were introduced and stirred so as to prepare a solution A (solution A') containing a solution C. Into a 500 mL flask, 380 g of water and 1.8 g of an aqueous solution of 1M sodium hydroxide (manufactured by Waco Pure Chemical Industries Ltd.) were introduced and stirred so as to prepare a solution B. The solution B was added to the solution A' while stirring the solution A' at 25°C, which was stirred at 25°C for 5 hours. The obtained whitish aqueous solution was filtered with a paper filter of Grade No. 5C, washed with water, and dried at 100°C by using a dryer (DRM420DA manufactured by Advantech Co., Ltd.), thereby a white powder was obtained. The obtained dry powder was dispersed into 100 mL of 0.01mol/L hydrochloric acid (manufactured by Waco Pure Chemical Industries Ltd.) and stirred at 25°C for 12 hours. The obtained white precipitate was filtered with a paper filter of Grade No. 5C, washed with water, and dried by using the dryer (DRM420DA manufactured by Advantech Co., Ltd.), thereby obtaining composite silica particles containing the rapeseed oil within the particles and whose outer shell parts have a mesoporous structure. The respective measurement results for the composite silica particles are illustrated in Table 1 below.

Comparative Example 1

Into a 500 mL flask, 300 g of water, 100 mL of methanol (special grade; manufactured by Waco Pure Chemical Industries Ltd.), 2.3 g of an aqueous solution of 1M sodium hydroxide (manufactured by Waco Pure Chemical Industries Ltd.), 1.75 g of dodecyl trimethyl ammonium bromide (manufactured by Tokyo Chemical Industry Co., Ltd.), and 1.5 g of rapeseed oil (manufactured by Sigma-Aldrich Japan) were introduced in this order and stirred at 25°C, to which subsequently 1.7 g of tetramethoxysilane (manufactured by Tokyo Chemical Industry Co., Ltd.) was added and stirred at 25°C for 5 hours. The obtained white precipitate was filtered by using a paper filter of Grade No. 5C, washed with water, and dried at 100°C with a dryer (DRM420DA manufactured by Advantech Co., Ltd.), thereby obtaining a white powder. The obtained dry powder was dispersed in 100 mL of 0.01mol/L hydrochloric acid (manufactured by Waco Pure Chemical Industries Ltd.) and stirred at 25°C for 12 hours. The obtained white precipitate was filtered with a paper filter of Grade No. 5C, washed with water, and dried by using the dryer (DRM420DA manufactured by Advantech Co., Ltd.), thereby obtaining composite silica particles containing the rapeseed oil within the particles and whose outer shell parts have a mesoporous structure. The respective measurement results on the composite silica particles are illustrated in Table 1 below.
[Table 1]

|  | Example 1 | Com. Ex. 1 | Example 2 | Examples 3 |
|---|---|---|---|---|
| Average particle size ($\mu$m) | 0.45 | 0.65 | 0.54 | 0.34 |
| BET specific surface area (m$^2$/g) | 645 | 677 | 620 | 650 |
| Average mesopore diameter (nm) | 1.60 | 1.48 | 1.69 | 1.52 |
| Hydrophobic organic substance | Rapeseed oil | Rapeseed oil | Hexane | Dodecane |
| Effective used amount of hydrophobic organic substance (%) | 39 | 22 | 75 | 52 |
| * Com. Ex.: Comparative Example | | | | |

As illustrated in the above Table 1, the utilization efficiencies of hydrophobic organic substances of the composite silica particles of Examples 1-3 were superior to that of the composite silica particles of Comparative Example 1.

Industrial Applicability

As mentioned above, the present invention is useful for example in any fields to which composite silica particles and hollow silica particles can be applied and which are directed to catalyst carriers, adsorbents, substance-separating agents, enzymes, carriers for immobilizing functional organic compounds or the like.

**Claims**

1. A method for producing composite silica particles each provided with an outer shell part having a mesoporous structure formed from a silica-containing component and including a hydrophobic organic substance in the interior of the outer shell part, the method comprising:

    adding an aqueous solvent to the hydrophobic organic substance and emulsifying; and
    forming the outer shell part having the mesoporous structure formed from the silica-containing component on the surface of an emulsified oil droplet of the hydrophobic organic substance.

2. The method for producing composite silica particles according to claim 1, wherein the outer shell part is formed under presence of at least one kind of quaternary ammonium salt selected from the group consisting of general formulae (1) and (2) below and a silica source for generating a silanol compound by hydrolysis:

    $$[R^1(CH_3)_3N]^+X^- \qquad (1)$$

    $$[R^1(CH_3)_2N]^+X^- \qquad (2)$$

    where $R^1$ and $R^2$ each denotes independently a linear or branched alkyl group having 4 to 22 carbon atoms, and $X^-$ denotes a univalent anion.

3. The method for producing composite silica particles according to claim 1 or 2, further comprising allowing the composite silica particles to contact with an acidic aqueous solution after formation of the outer shell part.

4. A method for producing hollow silica particles each provided with an outer shell part having a mesoporous structure and the interior being hollow, the method further comprising calcining the composite silica particles prepared by the method according to any one of claims 1 to 3 at temperature in a range of 350 to 950°C.

5. A method for producing hollow silica particles each provided with an outer shell part and the interior being hollow, the method further comprising calcining the composite silica particles prepared by the method according to any one of claims 1 to 3 at temperature higher than 950°C.

FIG. 1

FIG. 2

## INTERNATIONAL SEARCH REPORT

| International application No. |
| --- |
| PCT/JP2010/072257 |

**A. CLASSIFICATION OF SUBJECT MATTER**
*C01B33/12*(2006.01)i, *C01B37/00*(2006.01)i

According to International Patent Classification (IPC) or to both national classification and IPC

**B. FIELDS SEARCHED**

Minimum documentation searched (classification system followed by classification symbols)
C01B33/12, C01B37/00

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
WPI, JSTPlus(JDreamII), JST7580(JDreamII)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2008-150229 A (Kao Corp.),<br>03 July 2008 (03.07.2008),<br>the entire specification<br>& US 2010/0069237 A & EP 2078696 A1<br>& WO 2008/053695 A1 | 1-5 |
| A | JP 2008-285356 A (Suzuki Yushi Industrial Co., Ltd.),<br>27 November 2008 (27.11.2008),<br>the entire specification<br>(Family: none) | 1-5 |
| A | JP 2009-203116 A (Kao Corp.),<br>10 September 2009 (10.09.2009),<br>the entire specification<br>(Family: none) | 1-5 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12 January, 2011 (12.01.11) | 08 February, 2011 (08.02.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006102592 A

- JP 2008150229 A

**Non-patent literature cited in the description**

- **R,OHIT K. RANA.** *Adv.Mater.,* 2002, vol. 14, 1414
- **MEYLAN, W.M. ; P.H. HOWARD.** Atom/fragment contribution method for estimating octanol-water partition coefficients. *J. Pharm. Sci.,* 1995, vol. 84, 83-92

- **S.BRUNAUER et al.** *J.Amer.Chem.Soc.,* 1938, vol. 60, 309
- **E.P.BARRETT et al.** *J.Amer.Chem.Soc.,* 1951, vol. 73, 373